# EUROPEAN PATENT SPECIFICATION

(11) **EP 4 220 821 B1**
(45) Date of publication and mention of the grant of the patent: **31.12.2025**
(21) Application number: 22208939.3
(22) Date of filing: 22.11.2022
(51) Int. Cl.: H01M 10/625, B60K 1/04

(54) **VEHICLE-MOUNTED ELECTRIC COMPONENT COOLING STRUCTURE**
KÜHLSTRUKTUR FÜR FAHRZEUGMONTIERTE ELEKTRISCHE KOMPONENTEN
STRUCTURE DE REFROIDISSEMENT DE COMPOSANT ÉLECTRIQUE MONTÉ SUR VÉHICULE

(30) Priority: 28.01.2022 JP 2022012332
(43) Date of publication of application: 02.08.2023
(73) Proprietor: Suzuki Motor Corporation, Hamamatsu-shi, Shizuoka 432-8611 (JP)
(72) Inventor: KIUCHI, Seita, Hamamatsu-shi, 432-8611 (JP)
(74) Representative: Haseltine Lake Kempner LLP

(56) References cited:
- FR-A1- 3 102 409
- JP-A- 2004 001 683
- US-A1- 2010 273 040
- US-A1- 2018 015 806
- US-B2- 8 439 436

## Description

### [Technical Field]

The present invention relates to a vehicle-mounted electric component cooling structure.

### [Background Art]

An electric component generating heat, such as a battery, and a blower for cooling the electric component, are sometimes arranged in a rear region of a vehicle, such as a trunk.

For example, according to a cooling structure for a battery for an automobile disclosed in Patent Literature 1, a battery pack, a blower fan (hereinafter called a blower) for cooling a battery module in the battery pack, and an air intake duct (hereinafter called a duct) are arranged in a trunk (i.e., a rear region of a vehicle) behind a rear seat of a vehicle. According to the cooling structure, an air inlet is formed on a wall (i.e., a wall forming an occupant compartment) facing an occupant compartment (passenger compartment) of the vehicle. The air intake duct extends from the air inlet to the blower.

FR3102409 discloses a plate for adapting a battery to a support member. US2010/0273040 discloses a vehicular power supply system.

### [Citation List]

### [Patent Literature]

[Patent Literature 1] JP 2004-001683 A

### [Summary of Invention]

### [Problems to be Solved by the Invention]

However, the cooling structure disclosed in Patent Literature 1 has a problem in that liquid enters from the occupant compartment side into the duct through the air inlet, subsequently the liquid in the duct reaches the inside of the blower and the inside of the battery pack, and the liquid possibly adheres to an internal component of the blower, an internal component of the battery pack and the like. Note that it is also conceivable that an electric component other than the battery module (battery) is considered a cooling target by the blower. Also in this case, a similar problem can occur.

The present invention has been made to solve the above problem, and it has an object to provide a vehicle-mounted electric component cooling structure that has a structure capable of preventing liquid from adhering to an internal component of a blower and a cooling target electric component.

### [Means for Solving the Problems]

The invention is as described in the appended independent claims. Some optional features are described in the dependent claims.

### [Advantageous Effect of Invention]

According to the present invention, a vehicle-mounted electric component cooling structure can be provided that has a structure capable of preventing liquid from adhering to an internal component of a blower and a cooling target electric component.

### [Brief Description of Drawings]

[Figure 1] Figure 1 is a front view of a vehicle-mounted electric component cooling structure according to an embodiment of the present invention.
[Figure 2] Figure 2 shows a position of a ventilation portion of the vehicle-mounted electric component cooling structure.
[Figure 3] Figure 3 is a perspective view of a blower and a duct of the vehicle-mounted electric component cooling structure.
[Figure 4] Figure 4 is a partially enlarged view of the vehicle-mounted electric component cooling structure viewed from the front in the vehicle longitudinal direction.
[Figure 5] Figure 5 is a top view of an assembly of the blower and the duct.
[Figure 6] Figure 6 is a sectional view of the assembly taken along line A-A shown in Figure 5.
[Figure 7] Figure 7 is a partially enlarged view of the duct viewed from the vehicle width direction inner side.
[Figure 8] Figure 8 is a partially enlarged view of the duct viewed from the rear in the vehicle longitudinal direction.

### [Mode for Carrying Out the Invention]

Hereinafter, an embodiment of a vehicle-mounted electric component cooling structure according to the present invention is described with reference to the accompanying drawings.

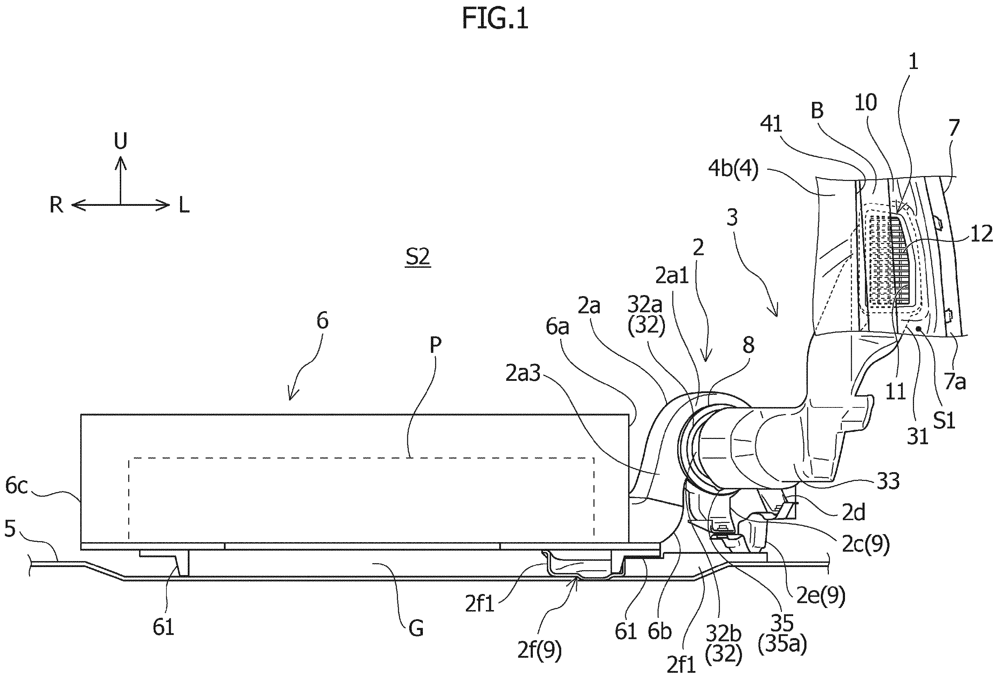

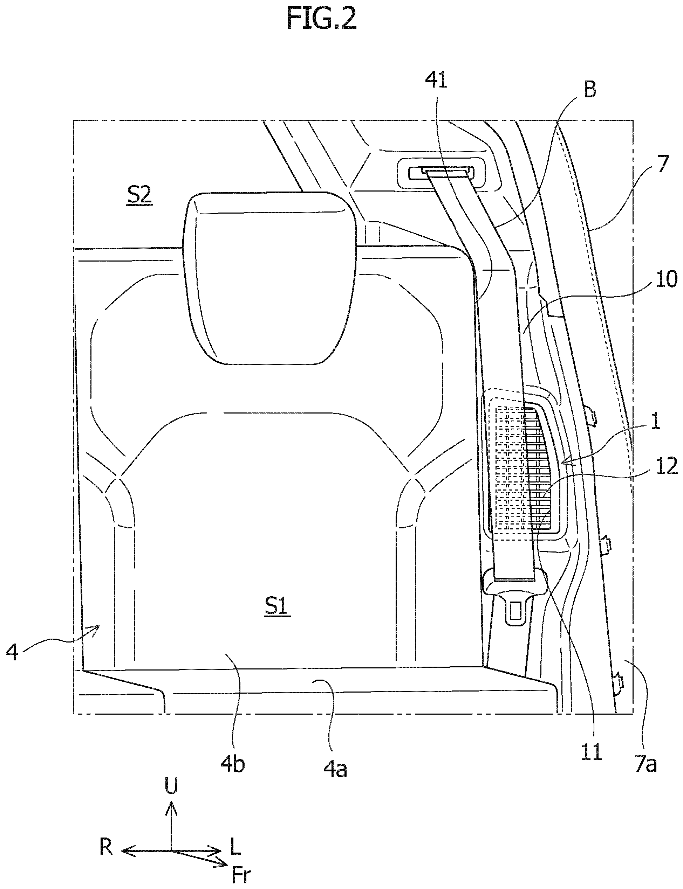

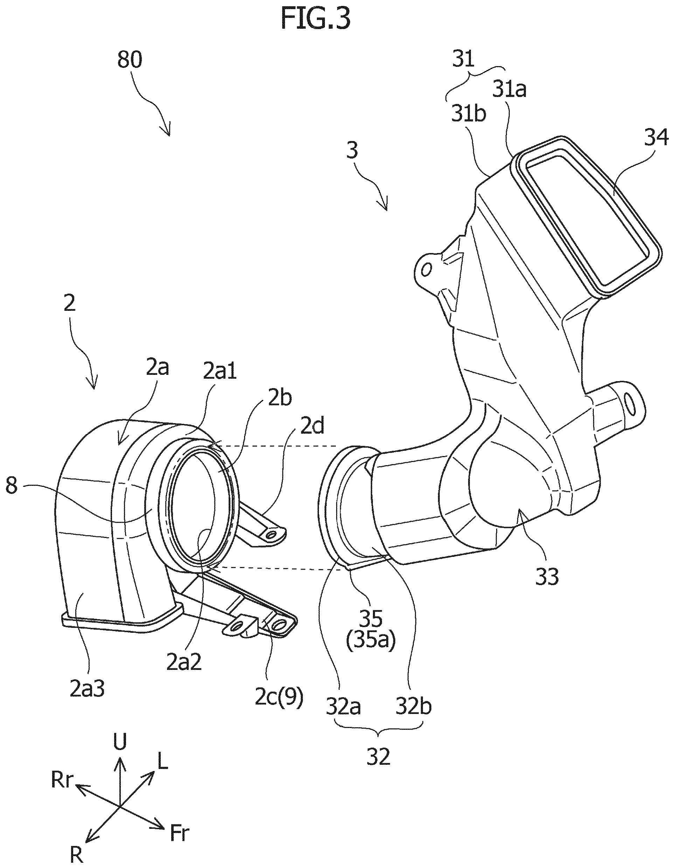

Figure 1 is a front view of a vehicle-mounted electric component cooling structure according to an embodiment of the present invention (specifically, a front view of the vehicle-mounted electric component cooling structure viewed from the front in the vehicle longitudinal direction). Figure 2 shows the position of a below-mentioned ventilation portion 1 of the vehicle-mounted electric component cooling structure. Figure 3 is a perspective view of a main part (a blower 2 and a duct 3, described later) of the vehicle-mounted electric component cooling structure. Note that in the drawings, an arrow Fr direction indicates the forward direction in the vehicle longitudinal direction, and an arrow Rr direction indicates the rearward direction in the vehicle longitudinal direction. An arrow R and an arrow L respectively indicate the right side and the left side in the vehicle width direction (car width direction) in view of an occupant facing ahead of the vehicle. An arrow U indicates the upward direction in the vehicle vertical direction.

Referring to Figures 1 and 2, the vehicle-mounted electric component cooling structure in this embodiment includes a ventilation portion 1, a blower 2 and a duct 3, and cools a predetermined electric component P in a rear region of the vehicle by an air cooling method. The rear region of the vehicle is a region that includes a region below a seat portion 4a of a rear seat 4 of the vehicle, and a region behind a seat back 4b of the rear seat 4 of the vehicle. A region forward of the rear seat 4 in the vehicle longitudinal direction constitutes most of an occupant compartment S1 of the vehicle.

In this embodiment, the electric component P that is a cooling target is arranged in a region rearward of the rear seat 4 in the rear region of the vehicle. Specifically, the electric component P is mounted on a part of a floor panel 5 rearward of the seat back 4b of the rear seat 4 in the vehicle longitudinal direction, the floor panel 5 constituting a floor portion of the vehicle. In other words, the electric component P is arranged in a trunk S2 behind the rear seat.

For example, an upper portion of the trunk S2 of the vehicle is configured to be opened and closed by a tonneau cover (not shown) provided slidably in the vehicle longitudinal direction at a height position corresponding to the top end of the rear seat 4 rearward of this rear seat 4. A region above the tonneau cover in a state in which the tonneau cover is closed constitutes part of the occupant compartment S1. Note that in a state in which the tonneau cover is open (a state shown in Figure 2), the trunk S2 and the occupant compartment S1 communicate with each other.

In this embodiment, the vehicle-mounted electric component cooling structure further includes a housing box 6 that internally stores the predetermined electric component P. For example, the housing box 6 is formed to have a rectangular box shape that is longer in the vehicle width direction, and is supported on the floor panel 5 via leg portions 61.

Although not specifically limited, in this embodiment, the electric component P is a high-voltage battery stored in the housing box 6. Note that the electric component P is not limited to the battery. For example, the component may be a DC/DC converter, an AC/DC converter or the like, and may be any electric component that easily generates heat and needs to be cooled.

The ventilation portion 1 has a ventilation hole 11 penetrating through a wall 10, which forms the occupant compartment S1 of the vehicle. In this embodiment, the ventilation portion 1 is positioned above the predetermined electric component P and the blower 2 in the vehicle vertical direction. Specifically, in this embodiment, the ventilation portion 1 is positioned above the predetermined electric component P and the blower 2 in the vehicle vertical direction, and between a side portion 41 of the rear seat 4 and a side panel 7 of the vehicle in the vehicle width direction.

More specifically, the wall 10, through which the ventilation hole 11 is penetrated, is a plastic trim that extends in the vertical direction along the side portion 41 of the seat back 4b of the rear seat 4 in the vehicle width direction outer side and is attached to the side panel 7. Consequently, the ventilation portion 1 is positioned adjacent to a door opening edge portion 7a that is opened on the side panel 7 and is for a rear side door. The wall 10 adjacent to the ventilation portion 1 is slightly inclined rearward in the vehicle longitudinal direction as it is extending upward in the vehicle vertical direction.

In this embodiment, it is configured so that air for cooling the electric component P is taken in from the ventilation portion 1 and is guided to the blower 2 through the duct 3. Consequently, in this embodiment, the ventilation hole 11 of the ventilation portion 1 functions as an air inlet for air cooling.

The ventilation hole 11 of the ventilation portion 1 is open as a substantially rectangular hole elongated in the vehicle vertical direction. The ventilation portion 1 includes a foreign matter intrusion prevention portion 12 that is formed to have a grid shape on the inner side of a ventilation hole opening edge. By this foreign matter intrusion prevention portion 12, large foreign matter is prevented from intruding through the ventilation hole 11.

The blower 2 is provided in the rear region of the vehicle, and causes a flow of air for cooling the predetermined electric component P in the rear region. The blower 2 is arranged, together with the electric component P, in the rear region of the vehicle. In this embodiment, the blower 2 is arranged adjacent to the electric component P in the trunk S2 behind the rear seat. Specifically, the blower 2 is arranged on the floor panel 5 adjacent to one side wall 6a in the vehicle width direction of the housing box 6 (left in Figure 2) (in other words, one side wall 6a in the longitudinal direction of the housing box 6).

Referring to Figure 3, the blower 2 includes a casing 2a, and a cylindrical connection portion 2b communicating with the duct 3. In this embodiment, the blower 2 is configured to supply air taken in through the ventilation portion 1 and the duct 3 into the housing box 6.

Although not specifically limited, for example, the blower 2 may be a centrifugal fan (or a centrifugal blower). Inside the casing 2a, centrifugal blades for blowing (e.g., a sirocco fan) are rotatably supported.

An intake 2a2 for taking in air is open on one side surface 2a1 of the casing 2a. An electric motor for driving the centrifugal blades is provided on the other side surface (the side surface opposite to the intake 2a2) of the casing 2a. The casing 2a is formed so as to surround the centrifugal blades. A cylindrical discharge cylinder 2a3 for discharging air taken in from the intake 2a2 is provided at a predetermined angle position in the circumferential direction of the casing 2a.

The connection portion 2b is cylindrically formed, for example. The connection portion 2b is attached to the opening edge portion of the intake 2a2 of the casing 2a, and protrudes from the one side surface 2a1 of the casing 2a.

A first bracket 2c and a second bracket 2d for supporting the blower 2 from below are provided under the casing 2a of the blower 2. The first bracket 2c and the second bracket 2d are coupled to the floor panel 5 via an intermediate bracket 2e or the like. Specifically, the intermediate bracket 2e is made of a thin metal plate and is formed to be bent in a hat shape protruding downward. An intermediate portion of the intermediate bracket 2e in the longitudinal direction is fixed on the floor panel 5. One end portion of the intermediate bracket 2e is fastened to the lower end of the first bracket 2c. The other end portion of the intermediate bracket 2e is fastened to the lower end of the second bracket 2d.

**In** a state in which the blower 2 is arranged adjacent to the one side wall 6a of the housing box 6 in the vehicle width direction, the connection portion 2b extends substantially forward in the vehicle longitudinal direction, and the discharge cylinder 2a3 of the casing 2a extends substantially downward in the vehicle vertical direction. More specifically, in a state in which a vehicle-width-direction inner part of the one side surface 2a1 of the casing 2a is inclined to be positioned slightly on the front side in the vehicle longitudinal direction more than a vehicle-width-direction outer part of the one side surface 2a1, the blower 2 is arranged on the floor panel 5. Consequently, the cylindrical connection portion 2b extends so as to be apart from the one side wall 6a of the housing box 6 as extending forward in the vehicle longitudinal direction (in other words, in the drawing, so as to approach the inner surface of the left side panel 7).

The duct 3 forms a flow path extending from the ventilation portion 1 to the blower 2. One end portion of the duct 3 communicates with the ventilation portion 1. The other end portion of the duct 3 communicates with the connection portion 2b of the blower 2. As described above, in this embodiment, the ventilation hole 11 of the ventilation portion 1 functions as an air inlet for air cooling. That is, the duct 3 is used as piping for guiding air in the occupant compartment S1 from the ventilation portion 1 to the blower 2. Note that the structure of the duct 3 is described later in detail.

The air guided through the duct 3 is discharged through the discharge cylinder 2a3 of the blower 2. The air discharged through the discharge cylinder 2a3 is guided into the housing box 6 through an air inlet pipe 6b provided on the one side wall 6a of the housing box 6 in the vehicle width direction. In other words, air blown by the blower 2 is pumped into the housing box 6. An exhaust pipe, not shown, is provided on the other side wall 6c of the housing box 6 in the vehicle width direction. When the blower 2 is activated, air is pumped into the housing box 6 through the discharge cylinder 2a3 and the inlet pipe 6b. At this time, in the internal space of the housing box 6, an air flow occurs substantially from the one side wall 6c toward the other side wall 6c along the surface of the electric component P in the housing box 6. By the air flow along the surface of the electric component P as described above, the electric component P is cooled. The air heated by heat exchange through the surface of the electric component P is discharged out of the housing box 6 through the exhaust pipe.

Incidentally, in case an occupant in the occupant compartment S1 spills liquid, such as a beverage, and the like, the liquid may possibly intrude from the occupant compartment S1 side into the duct 3 through the ventilation portion 1. In a case in which the ventilation portion 1 is positioned adjacent to the door opening edge portion 7a for the rear side door as in this embodiment, liquid, such as rainwater, possibly intrudes from the occupant compartment S1 side into the duct 3 through the ventilation portion 1. Furthermore, condensation occurs in the duct 3 in some cases. In such cases, liquid (beverage, rainwater, etc.) having intruded into the duct 3 and liquid, such as condensation water, in the duct 3 possibly reaches the inside of the blower 2 and the inside of the housing box 6. On the other hand, the vehicle-mounted electric component cooling structure according to this embodiment has a structure (liquid adhesion prevention structure) described later, for the sake of effectively preventing liquid having intruded into the duct 3 and liquid, such as condensation water, in the duct 3, from adhering to the internal component of the blower 2 and the cooling target electric component P.

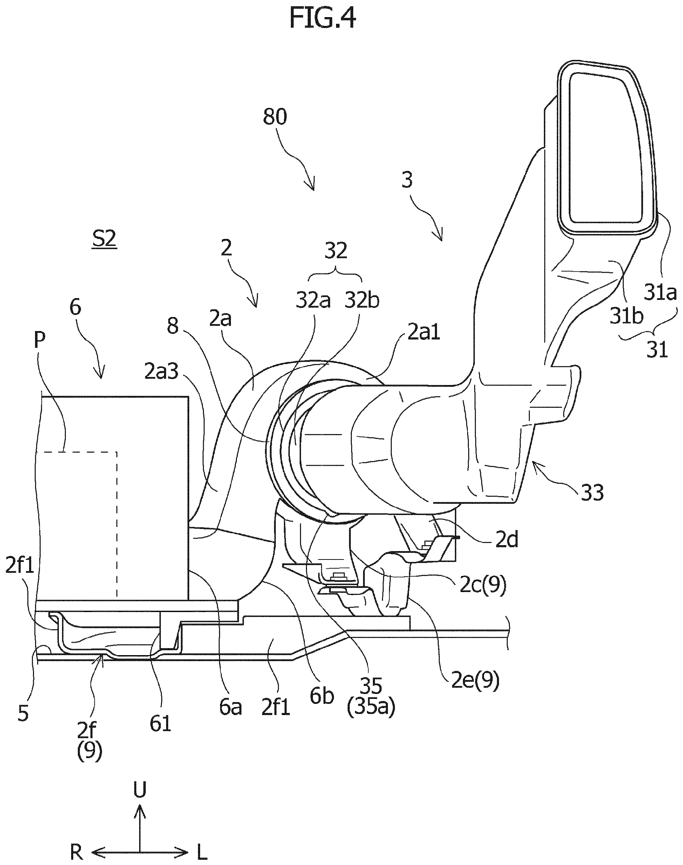

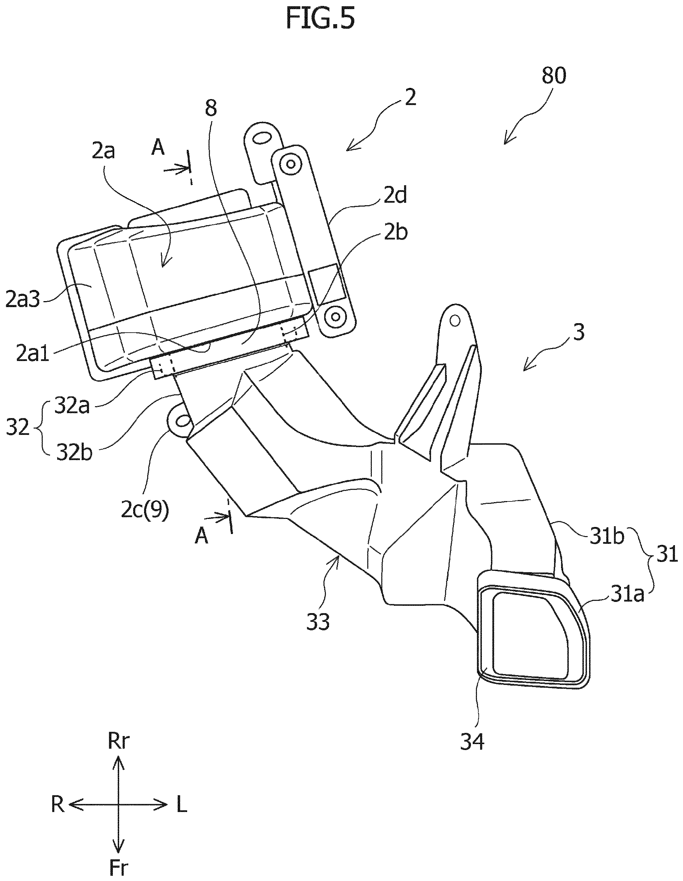

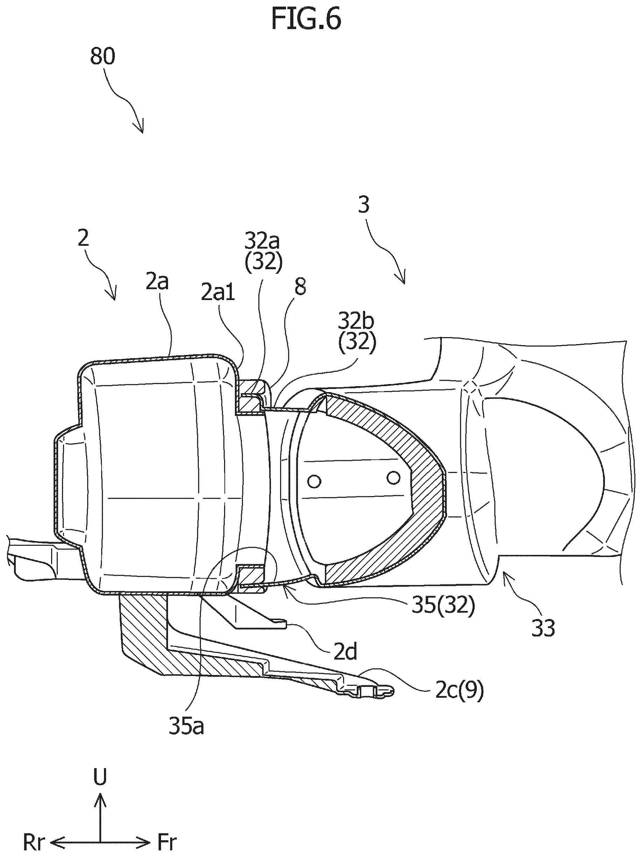

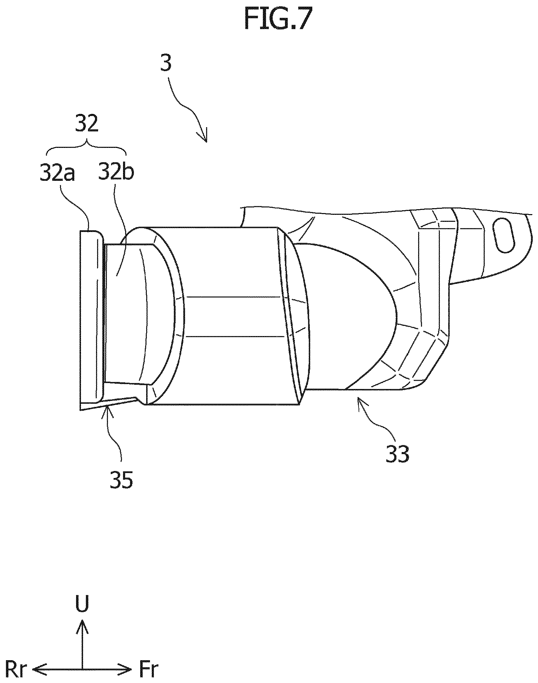

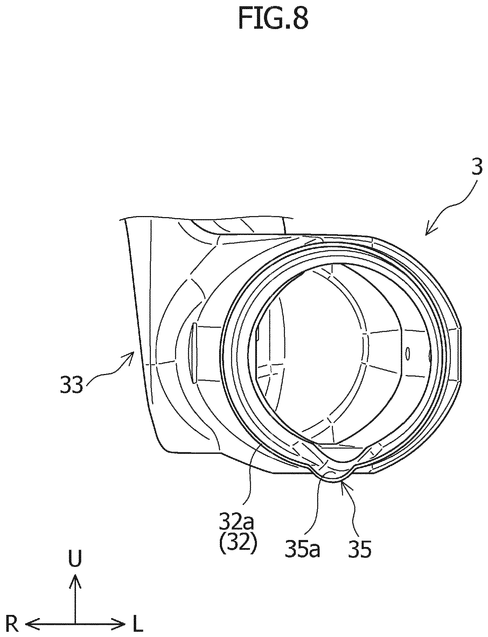

Next, the liquid adhesion prevention structure is described mainly with reference to Figures 3 to 8. Figure 4 is a partially enlarged view of the vehicle-mounted electric component cooling structure viewed from the front of the vehicle longitudinal direction. Figure 5 is a top view of an assembly 80 of the blower 2 and the duct 3. Figure 6 is a sectional view of the assembly 80 taken along line A-A shown in Figure 5. Figure 7 is a partially enlarged view of the duct 3 viewed from the vehicle width direction inner side. Figure 8 is a partially enlarged view of the duct 3 viewed from the rear in the vehicle longitudinal direction.

Referring to Figure 3, the duct 3 includes a ventilation-portion-side piping portion 31 communicating with the ventilation portion 1, a cylinder portion 32 communicating with the blower 2, and a duct main body 33.

For example, the duct 3 is made of a plastic material, and is formed by injection molding. By combining the duct 3 and the blower 2, the assembly 80 of the duct 3 and the blower 2 is configured as shown in Figures 4 to 6.

For example, the ventilation-portion-side piping portion 31 is formed to have a stepped cylindrical shape, which constitutes one end portion of the duct 3 communicating with the ventilation portion 1. Specifically, the ventilation-portion-side piping portion 31 is formed to have a substantially rectangular tube, and includes a first rectangular tube portion 31a on the ventilation portion 1 side, and a second rectangular tube portion 31b having a smaller sectional area than the first rectangular tube portion 31a. The first rectangular tube portion 31a is in contact with a ventilation hole peripheral portion of the ventilation portion 1 from the back side of the wall 10 forming the occupant compartment S1 of the vehicle, which allows the ventilation-portion-side piping portion 31 to communicate with the ventilation portion 1. The ventilation-portion-side piping portion 31 extends forward in the vehicle longitudinal direction and in an obliquely upward direction according to the inclination of the wall 10 adjacent to the ventilation portion 1. Note that a sealing member 34 annularly shaped so as to be along the inner peripheral surface of the first rectangular tube portion 31a is fitted inside this first rectangular tube portion 31a. The sealing member 34 is in contact with the ventilation hole peripheral portion of the ventilation portion 1, which seals the gap between the duct 3 and the ventilation portion 1 (wall 10).

The cylinder portion 32 is a part which is cylindrically formed and into which the connection portion 2b of the blower 2 is inserted, and constitutes the other end portion of the duct 3 that communicates with the blower 2. The cylinder portion 32 is formed to have a stepped cylindrical form, for example. For example, the cylinder portion 32 includes a first cylinder portion 32a on the blower 2 side, and a second cylinder portion 32b having a smaller sectional area than the first cylinder portion 32a. The connection portion 2b of the blower 2 is then inserted (fitted) into the cylinder portion 32 of the duct 3, and the other end of the duct 3 and the connection portion 2b of the blower 2 communicate with each other.

Referring to Figures 3 to 6, the cylinder portion 32 is formed to have a stepped thin-walled cylinder. The inner diameter of the second cylinder portion 32b of the cylinder portion 32 is set to be slightly greater than the outer diameter of the connection portion 2b of the blower 2. The distal end of the connection portion 2b of the blower 2 is inserted into a part of the second cylinder portion 32b (see Figures 5 and 6).

The duct main body 33 is a part that allows the ventilation-portion-side piping portion 31 and the cylinder portion 32 to communicate with each other. Specifically, the duct main body 33 extends from the end portion of the second cylinder portion 32b to the end portion of the second rectangular tube portion 31b, extends substantially forward in the vehicle longitudinal direction from the second cylinder portion 32b, then is bent upward at about 90 degrees and extends upward in the vehicle vertical direction.

Here, the assembly 80 of the blower 2 and the duct 3 includes a foamed member 8 that surrounds an end portion of the cylinder portion 32 over the inner peripheral surface, the end surface and the outer peripheral surface of the cylinder portion 32.

Specifically, as shown in Figure 3, the foamed member 8 is attached to the connection portion 2b so as to surround the outer peripheral surface of the cylindrical connection portion 2b of the blower 2. The foamed member 8 has elasticity, and is made of a sponge material, for example. The foamed member 8 is formed into a circular ring shape having a thickness equivalent to the protruding length (the protruding length from the one side surface 2a1) of the connection portion 2b of the blower 2. The inner diameter of the foamed member 8 is equivalent to the outer diameter of the connection portion 2b of the blower 2, and is less than the inner diameter of the first cylinder portion 32a of the cylinder portion 32 of the duct 3. The outer diameter of the foamed member 8 is greater than the outer diameter of the first cylinder portion 32a of the cylinder portion 32 of the duct 3. When the connection portion 2b of the blower 2 is connected to the duct 3, in a state in which the foamed member 8 is attached around the connection portion 2b of the blower 2 (see Figure 3), the end surface of the cylinder portion 32 (first cylinder portion 32a) of the duct 3 comes into contact with the end surface of the foamed member 8, and a part of the foamed member 8 corresponding to the cylinder portion 32 (a part indicated by a chain double-dashed line in Figure 3) is collapsed (see Figure 6). At this time, the blower 2 is fixed to the floor panel 5, and the duct 3 is appropriately fixed to the side panel 7, the wall 10 and the like, thereby maintaining the communication state (see Figure 6) between the blower 2 and the duct 3. In the state in which the blower 2 and the duct 3 communicate with each other, the foamed member 8 surrounds the end portion of the cylinder portion 32 over the inner peripheral surface, the end surface and the outer peripheral surface of the cylinder portion 32 at the first cylinder portion 32a. Note that the connection portion 2b of the blower 2 is supported by the end portion (cylinder portion 32) of the duct 3 on the blower side via the foamed member 8. In other words, the end portion (cylinder portion 32) of the duct 3 on the blower side is supported by the connection portion 2b of the blower 2 via the foamed member 8.

Referring to Figures 6 to 8, in this embodiment, the duct 3 includes a discharge portion 35 that has a groove 35a extending, at the lower end portion of the inner peripheral surface of the cylinder portion 32 in the vehicle vertical direction, to the end surface of the cylinder portion 32 along this inner peripheral surface. The discharge portion 35 is formed to bulge downward relative to the outer peripheral surface of the other part of the cylinder portion 32. The groove bottom of the groove 35a of the discharge portion 35 is curved to have an arc shape, for example (see Figure 8).

In this embodiment, the groove bottom of the groove 35a is inclined so as to be apart from the outer peripheral surface of the connection portion 2b as it is extending toward the end surface of the cylinder portion 32 (in other words, the blower 2) (see Figures 6 and 8). The connection portion 2b substantially extends in the horizontal direction. The groove bottom of the groove 35a is inclined with respect to the horizontal direction, and is positioned on the lower side in the vertical direction further at the end surface of the cylinder portion 32 (blower 2 side).

In this embodiment, as described above, the foamed member 8 has elasticity. A part of the foamed member 8 that faces the groove 35a of the discharge portion 35 is positioned in the inner region of the groove 35a. Specifically, in a state of being collapsed by the cylinder portion 32, an inner part of the foamed member 8 in the radial direction is deformed to fill the annular space between the connection portion 2b of the blower 2 and the first cylinder portion 32a of the cylinder portion 32 of the duct 3, as shown in Figure 6. In this state, a part of the foamed member 8 corresponding to the groove 35a of the discharge portion 35 is deformed to be inserted into the inner region of the groove 35a. Note that in this embodiment, the groove 35a (discharge portion 35) is formed over the entire cylinder portion 32 in the longitudinal direction, and extends not only to the region of the first cylinder portion 32a, but also to the region of the second cylinder portion 32b. The inner region of a part of the groove 35a corresponding to the first cylinder portion 32a in the longitudinal direction is filled with the foamed member 8, and the inner region of a part of the groove 35a corresponding to the second cylinder portion 32b in the longitudinal direction is open.

The assembly 80 includes a conduit portion 9 extending from a position immediately below the discharge portion 35 to a predetermined position of not overlapping the electric component P (the housing box 6 in this embodiment) in top view. The conduit portion 9 receives liquid discharged from an open end of the discharge portion 35, and guides the received liquid to the predetermined position. In this embodiment, the conduit portion 9 includes the first bracket 2c, the intermediate bracket 2e, and a conduit tray 2f. The conduit tray 2f is positioned between the intermediate bracket 2e and the leg portions 61, and the floor panel 5, and extends from a part of the floor panel 5 corresponding to the intermediate bracket 2e to a forward position of the housing box 6. The conduit tray 2f includes a conduit wall 2f1 so as to receive liquid discharged from the open end of the discharge portion 35, and guides the liquid to the forward position of the housing box 6 on the floor panel 5 serving as the predetermined position, for example. Note that rust-proofing treatment is applied to the surface of a part on the floor panel 5 corresponding at least to the predetermined position.

Returning to Figures 1 and 2, the vehicle-mounted electric component cooling structure according to this embodiment includes a strap member B that covers part of the ventilation hole 11 of the ventilation portion 1 from the front side in the vehicle longitudinal direction.

In this embodiment, the strap member B is part of a seatbelt. Specifically, the ventilation portion 1 is positioned above the predetermined electric component P and the blower 2 in the vehicle vertical direction, and between a side portion 41 of the rear seat 4 and a side panel 7 of the vehicle in the vehicle width direction. The seatbelt is arranged so as to be along the wall 10 that is the above-described plastic trim extending in the vertical direction along the side portion 41 of the seat back 4b of the rear seat 4 in the vehicle width direction outer side, and a predetermined part of the seatbelt in the longitudinal direction covers part of the ventilation hole 11 of the ventilation portion 1.

As shown in Figure 1, in this embodiment, a gap G is secured between the housing box 6 and the floor panel 5 in the rear region of the vehicle (see Figure 1). The conduit portion 9 described above extends so as to pass below a corner portion of the housing box 6 (a corner portion on the front left side in the drawing) through the gap G between the housing box 6 and the floor panel 5.

Next, the operation of the vehicle-mounted electric component cooling structure according to this embodiment is described with an example of a case in which liquid intrudes into the duct 3 from the occupant compartment S1 side through the ventilation portion 1.

The liquid having intruded from the occupant compartment S1 side into the duct 3 through the ventilation hole 11 of the ventilation portion 1 flows toward the blower 2 through the ventilation-portion-side piping portion 31 and the duct main body 33, and subsequently reaches the cylinder portion 32. The liquid having reached the cylinder portion 32 is accumulated in the discharge portion 35. The accumulated liquid flows along the inclined groove bottom of the groove 35a of the discharge portion 35. Specifically, the liquid having reached the cylinder portion 32 flows along a part of the groove 35a corresponding to the second cylinder portion 32b in the longitudinal direction, subsequently is absorbed by the foamed member 8 along the groove bottom of the groove 35a, and flows toward the open end of the groove 35a (discharge portion 35) (in other words, toward the cylinder portion 32). The liquid having reached the open end of the groove 35a flows down through the part of the foamed member 8 collapsed between the end surface of the cylinder portion 32 and the one side surface 2a1 of the casing 2a. The liquid having flowed is absorbed in part of the foamed member 8 along the outer peripheral surface of the discharge portion 35, and subsequently falls downward. That is, the liquid having been discharged out of the duct 3 through the discharge portion 35 falls downward. The fallen liquid is received into the conduit portion 9 (the first bracket 2c, the intermediate bracket 2e, and the conduit tray 2f). The received liquid flows below the housing box 6 through the conduit portion 9, and subsequently is guided to an intended position (e.g., the forward position of the housing box 6). As described above, the liquid having intruded into the duct 3 is absorbed by the foamed member 8. Accordingly, the liquid is efficiently prevented from reaching the internal component of the blower 2 and the cooling target electric component P. As a result, the liquid can be effectively prevented from adhering to the internal component of the blower 2 and the surface of the cooling target electric component P. Note that in case condensation occurs in the duct 3, condensation water is discharged out of the duct 3, similar to the liquid having intruded into the duct 3.

As described above, the vehicle-mounted electric component cooling structure according to this embodiment has a structure capable of effectively preventing liquid from adhering to the internal component of the blower 2 and the cooling target electric component P. The foamed member 8 also has a function as a support member for the connection portion 2b of the blower 2 and the end portion of the duct 3 (cylinder portion 32) on the blower side. Thus, the support member, which negates the necessity of considering corrosion (rust, etc.) due to liquid adhesion, is made of the foamed member 8.

In this embodiment, the duct 3 includes the discharge portion 35 that has the groove 35a extending, at the lower end portion of the inner peripheral surface of the cylinder portion 32 in the vehicle vertical direction, to the end surface of the cylinder portion 32 along this inner peripheral surface. Accordingly, the duct 3 can accumulate the liquid in the duct 3 through the discharge portion 35, and securely and efficiently discharge the accumulated liquid out of the duct 3 through the discharge portion 35. In this embodiment, the groove bottom of the groove 35a is inclined so as to be apart from the outer peripheral surface of the connection portion 2b as extending toward the end surface of the cylinder portion 32. Accordingly, the liquid in the duct 3 can be effectively discharged.

In this embodiment, the foamed member 8 has elasticity. Accordingly, the gap between the connection portion 2b of the blower 2 and the cylinder portion 32 of the duct 3 is filled with the foamed member 8. Consequently, the foamed member 8 can have sufficient capability of discharging the liquid in the duct 3 without greatly reducing the airtightness between the blower 2 and the duct 3. Vibrations that can be caused by being driven by the blower 2 can be prevented from propagating to the occupant compartment S1 through the duct 3 and the like by the foamed member 8.

In this embodiment, the assembly 80 includes the conduit portion 9 that extends from the position immediately below the discharge portion 35 to the predetermined position not overlapping the electric component P (the housing box 6 in this embodiment) in top view, and guides the liquid discharged through the discharge portion 35, to the predetermined position. Accordingly, the liquid discharged out of the duct 3 is guided by the conduit portion 9 to an intended position to which rust-proof treatment or the like has been applied. Consequently, the adverse effects on the vehicle due to liquid discharge are alleviated.

In this embodiment, part of the ventilation hole 11 of the ventilation portion 1 is covered with the strap member B from the front side in the vehicle longitudinal direction. Accordingly, liquid can be effectively prevented from intruding into the duct 3 from the occupant compartment S1. In this embodiment, the strap member B is part of the seat belt, which can design prevention of liquid intrusion without adding any component for preventing liquid intrusion.

In this embodiment, the gap G is secured between the housing box 6 and the floor panel 5. Accordingly, even if liquid discharged out of the duct 3 is dispersed and drips on the floor panel 5, the liquid dripping on the floor panel 5 can be securely prevented from intruding into the housing box 6 through the gap on the bottom wall and the like of the housing box 6.

The description of this embodiment is an example for illustrating the present invention, and does not limit the invention as in the claims. The configuration of each component of the present invention is not limited to that in the embodiment described above, and can be variously modified in technical scope as in the claims.

For example, since the foamed member 8 has elasticity, this member is deformed in conformity with the shape of the cylinder portion 32. Without limitation to this, the foamed member 8 does not necessarily have elasticity. In this case, the foamed member 8 is only required to be formed to have a groove portion allowing the cylinder portion 32 (first cylinder portion 32a) to be fitted. The strap member B is not necessarily a seatbelt. The discharge portion 35 is not necessarily provided with the conduit portion 9 and the strap member B. Furthermore, the gap G is not necessarily secured between the housing box 6 and the floor panel 5.

The duct 3 can be formed to have an appropriate shape. The ventilation portion 1 is formed at the trim on the side of the rear seat 4. Without limitation to this, the ventilation portion 1 may be formed on an appropriate wall that forms the occupant compartment S1. Furthermore, it is assumed that the electric component P is arranged in the trunk S2 behind the rear seat. Without limitation to this, the electric component P may be arranged below the seat portion 4a of the rear seat 4. In this case, the blower 2 may be arranged below the seat portion 4a together with the electric component P, and arranged in the trunk S2. The blower 2 may be arranged below the seat portion 4a, and the electric component P may be arranged in the trunk S2.

In this embodiment, the blower 2 supplies air taken in through the ventilation portion 1 and the duct 3, into the housing box 6, thus cooling the electric component P. The direction of the air flow is not limited to this. That is, the air flow may be inverted from that in this embodiment. In this case, the blower 2 takes in air in the housing box 6, and discharges the taken air through the duct 3 and the ventilation portion 1, thus causing an air flow along the surface of the electric component P in the housing box 6 and cooling the electric component P.

### [Reference Signs List]

- 1: Ventilation portion
- 2: Blower
- 2b: Connection portion
- 3: Duct
- 4: Rear seat
- 5: Floor panel
- 6: Housing box
- 7: Side panel
- 8: Foamed member
- 9: Conduit portion
- 10: Wall
- 11: Ventilation hole
- 32: Cylinder portion
- 35: Discharge portion
- 35a: Groove
- 41: Side portion of rear seat
- 80: Assembly
- B: Strap member (part of seat belt)
- G: Gap
- P: Electric component
- S1: Occupant compartment

## Claims

1. A vehicle-mounted electric component cooling structure, comprising: a ventilation portion (1) that has a ventilation hole (11) penetrating a wall (10) forming an occupant compartment (S1) of a vehicle; a blower (2) that is provided in a rear region of the vehicle and causes an air flow for cooling a predetermined electric component (P) in the rear region; and a duct (3) that forms a flow path extending from the ventilation portion (1) to the blower (2), wherein
the blower (2) includes a cylindrical connection portion (2b) protruding from one side surface (2a1) of the casing (2a) of the blower (2) and communicating with the duct (3),
the duct (3) includes a cylinder portion (32) that is cylindrically formed and allows the connection portion (2b) of the blower (2) to be internally inserted, said vehicle-mounted electric component cooling structure being **characterized in that**
an assembly (80) of the blower (2) and the duct (3) includes a foamed member (8), the foamed member (8) surrounds an end portion of the cylinder portion (32) over an inner peripheral surface, an end surface and an outer peripheral surface of the cylinder portion (32) and includes a part collapsed between the end surface of the cylinder portion (32) and the one side surface (2a1).

2. A vehicle-mounted electric component cooling structure, comprising: a ventilation portion (1) that has a ventilation hole (11) penetrating a wall (10) forming an occupant compartment (S1) of a vehicle; a blower (2) that is provided in a rear region of the vehicle and causes an air flow for cooling a predetermined electric component (P) in the rear region; and a duct (3) that forms a flow path extending from the ventilation portion (1) to the blower (2), wherein
the blower (2) includes a cylindrical connection portion (2b) communicating with the duct (3),
the duct (3) includes a cylinder portion (32) that is cylindrically formed and allows the connection portion (2b) of the blower (2) to be internally inserted,
said vehicle-mounted electric component cooling structure being **characterized in that** an assembly (80) of the blower (2) and the duct (3) includes a foamed member (8) that surrounds an end portion of the cylinder portion (32) over an inner peripheral surface, an end surface and an outer peripheral surface of the cylinder portion (32), and **in that**
the duct (3) includes a discharge portion (35) that has a groove (35a) extending in a vehicle-vertical-direction lower end portion of the inner peripheral surface of the cylinder portion (32), to the end surface of the cylinder portion (32) along the inner peripheral surface.

3. The vehicle-mounted electric component cooling structure according to claim 2, wherein a groove bottom of the groove (35a) is inclined to be apart from an outer peripheral surface of the connection portion (2b) as extending toward the end surface of the cylinder portion (32).

4. The vehicle-mounted electric component cooling structure according to claim 2 or 3, wherein
the foamed member (8) has elasticity, and
part of the foamed member (8) that faces the groove (35a) of the discharge portion (35) is positioned in an inner region of the groove (35a).

5. The vehicle-mounted electric component cooling structure according to any one of claims 2 to 4, wherein the assembly (80) includes a conduit portion (9) that extends from a position immediately below the discharge portion (35) to a predetermined position not overlapping the predetermined electric component (P) in top view, and guides liquid discharged from the discharge portion (35), to the predetermined position.

6. The vehicle-mounted electric component cooling structure according to any one of claims 1 to 5, wherein
the ventilation portion (1) is positioned above the predetermined electric component (P) and the blower (2) in a vehicle vertical direction, and between a side portion of a rear seat (4) and a side panel (7) of the vehicle in a vehicle width direction, and
the vehicle-mounted electric component cooling structure includes a strap member (B) that covers part of the ventilation hole (11) of the ventilation portion (1) from a front side in a vehicle longitudinal direction.

7. The vehicle-mounted electric component cooling structure according to claim 6, wherein the strap member (B) is part of the seat belt.

8. The vehicle-mounted electric component cooling structure according to any one of claims 1 to 7, comprising:
a housing box (6) that internally stores the predetermined electric component (P),
wherein a gap (G) is secured between the housing box (6) and a floor panel (5) in the rear region of the vehicle.

## Patentansprüche

1. Kühlstruktur für fahrzeugmontierte elektrische Komponenten, umfassend: einen Belüftungsabschnitt (1), der eine Belüftungsöffnung (11) aufweist, die eine Wand (10) durchdringt, die einen Insassenraum (S1) eines Fahrzeugs bildet; ein Gebläse (2), das in einem hinteren Bereich des Fahrzeugs bereitgestellt ist und eine Luftströmung zum Kühlen einer vorbestimmten elektrischen Komponente (P) in dem hinteren Bereich verursacht; und einen Kanal (3), der einen Strömungsweg bildet, der sich von dem Belüftungsabschnitt (1) zu dem Gebläse (2) erstreckt, wobei
das Gebläse (2) einen zylindrischen Verbindungsabschnitt (2b) beinhaltet, der von einer Seitenfläche (2a1) des Gehäuses (2a) des Gebläses (2) vorsteht und mit dem Kanal (3) in Verbindung steht,
der Kanal (3) einen Zylinderabschnitt (32) beinhaltet, der zylindrisch gebildet ist und ermöglicht, den Verbindungsabschnitt (2b) des Gebläses (2) in das Innere einzusetzen, wobei die Kühlstruktur für fahrzeugmontierte elektrische Komponenten **dadurch gekennzeichnet ist, dass**
eine Baugruppe (80) aus dem Gebläse (2) und dem Kanal (3) ein geschäumtes Element (8) beinhaltet, das geschäumte Element (8) einen Endabschnitt des Zylinderabschnitts (32) über einer Innenumfangsfläche, einer Endfläche und einer Außenumfangsfläche des Zylinderabschnitts (32) umgibt und einen zwischen der Endfläche des Zylinderabschnitts (32) und der einen Seitenfläche (2a1) zusammengedrückten Teil beinhaltet.

2. Kühlstruktur für fahrzeugmontierte elektrische Komponenten, umfassend: einen Belüftungsabschnitt (1), der eine Belüftungsöffnung (11) aufweist, die eine Wand (10) durchdringt, die einen Insassenraum (S1) eines Fahrzeugs bildet; ein Gebläse (2), das in einem hinteren Bereich des Fahrzeugs bereitgestellt ist und eine Luftströmung zum Kühlen einer vorbestimmten elektrischen Komponente (P) in dem hinteren Bereich verursacht; und einen Kanal (3), der einen Strömungsweg bildet, der sich von dem Belüftungsabschnitt (1) zu dem Gebläse (2) erstreckt, wobei
das Gebläse (2) einen zylindrischen Verbindungsabschnitt (2b) beinhaltet, der mit dem Kanal (3) in Verbindung steht,
der Kanal (3) einen Zylinderabschnitt (32) beinhaltet, der zylindrisch gebildet ist und ermöglicht, den Verbindungsabschnitt (2b) des Gebläses (2) in das Innere einzusetzen,
wobei die Kühlstruktur für fahrzeugmontierte elektrische Komponenten **dadurch gekennzeichnet ist, dass** eine Baugruppe (80) aus dem Gebläse (2) und dem Kanal (3) ein geschäumtes Element (8) beinhaltet, das einen Endabschnitt des Zylinderabschnitts (32) über einer Innenumfangsfläche, einer Endfläche und einer Außenumfangsfläche des Zylinderabschnitts (32) umgibt; und dadurch, dass
der Kanal (3) einen Ableitungsabschnitt (35) beinhaltet, der eine Nut (35a) aufweist, die sich in einem in vertikaler Richtung des Fahrzeugs unteren Endabschnitt der Innenumfangsfläche des Zylinderabschnitts (32) entlang der Innenumfangsfläche zu der Endfläche des Zylinderabschnitts (32) erstreckt.

3. Kühlstruktur für fahrzeugmontierte elektrische Komponenten nach Anspruch 2, wobei ein Nutboden der Nut (35a) so geneigt ist, dass er von einer Außenumfangsfläche des Verbindungsabschnitts (2b) entfernt ist, wenn er sich in Richtung der Endfläche des Zylinderabschnitts (32) erstreckt.

4. Kühlstruktur für fahrzeugmontierte elektrische Komponenten nach Anspruch 2 oder 3, wobei
das geschäumte Element (8) elastisch ist und
der Teil des geschäumten Elements (8), welcher der Nut (35a) des Ableitungsabschnitts (35) zugewandt ist, in einem Innenbereich der Nut (35a) positioniert ist.

5. Kühlstruktur für fahrzeugmontierte elektrische Komponenten nach einem der Ansprüche 2 bis 4, wobei die Baugruppe (80) einen Leitungsabschnitt (9) beinhaltet, der sich von einer Position unmittelbar unterhalb des Ableitungsabschnitts (35) zu einer vorbestimmten Position erstreckt, welche die vorbestimmte elektrische Komponente (P) in der Draufsicht nicht überlappt, und der von dem Ableitungsabschnitt (35) abgeleitete Flüssigkeit zu der vorbestimmten Position leitet.

6. Kühlstruktur für fahrzeugmontierte elektrische Komponenten nach einem der Ansprüche 1 bis 5, wobei
der Belüftungsabschnitt (1) in einer vertikalen Richtung des Fahrzeugs über der vorbestimmten elektrischen Komponente (P) und dem Gebläse (2) und in einer Querrichtung des Fahrzeugs zwischen einem Seitenabschnitt eines Rücksitzes (4) und einem Seitenblech (7) des Fahrzeugs positioniert ist, und
die Kühlstruktur für fahrzeugmontierte elektrische Komponenten ein Riemenelement (B) beinhaltet, das einen Teil der Belüftungsöffnung (11) des Belüftungsabschnitts (1) von einer Vorderseite in einer Fahrzeuglängsrichtung abdeckt.

7. Kühlstruktur für fahrzeugmontierte elektrische Komponenten nach Anspruch 6, wobei das Riemenelement (B) Teil des Sitzgurts ist.

8. Kühlstruktur für fahrzeugmontierte elektrische Komponenten nach einem der Ansprüche 1 bis 7, umfassend:
einen Gehäusekasten (6), in dem die vorbestimmte elektrische Komponente (P) untergebracht ist,
wobei ein Spalt (G) zwischen dem Gehäusekasten (6) und einem Bodenblech (5) in dem hinteren Bereich des Fahrzeugs sichergestellt ist.

## Revendications

1. Structure de refroidissement de composant électrique monté sur véhicule, comprenant : une partie de ventilation (1) qui présente un orifice de ventilation (11) traversant une paroi (10) formant un habitacle (S1) d'un véhicule ; un ventilateur (2) qui est disposé dans une région arrière du véhicule et produit un écoulement d'air pour refroidir un composant électrique prédéterminé (P) dans la région arrière ; et un conduit (3) qui forme un trajet d'écoulement s'étendant de la partie de ventilation (1) jusqu'au ventilateur (2), dans laquelle
le ventilateur (2) comprend une partie de raccordement cylindrique (2b) faisant saillie d'une surface latérale (2a1) du boîtier (2a) du ventilateur (2) et communiquant avec le conduit (3),
le conduit (3) comprend une partie cylindrique (32) qui est de forme cylindrique et permet l'insertion en son sein de la partie de raccordement (2b) du ventilateur (2), ladite structure de refroidissement de composant électrique monté sur véhicule étant **caractérisée en ce que**
un ensemble (80) du ventilateur (2) et du conduit (3) comprend un élément en mousse (8), l'élément en mousse (8) entoure une partie d'extrémité de la partie cylindrique (32) sur une surface périphérique interne, une surface d'extrémité et une surface périphérique externe de la partie cylindrique (32) et comprend une partie affaissée entre la surface d'extrémité de la partie cylindrique (32) et ladite surface latérale (2a1).

2. Structure de refroidissement de composant électrique monté sur véhicule, comprenant : une partie de ventilation (1) qui présente un orifice de ventilation (11) traversant une paroi (10) formant un habitacle (S1) d'un véhicule ; un ventilateur (2) qui est disposé dans une région arrière du véhicule et produit un écoulement d'air pour refroidir un composant électrique prédéterminé (P) dans la région arrière ; et un conduit (3) qui forme un trajet d'écoulement s'étendant de la partie de ventilation (1) jusqu'au ventilateur (2), dans laquelle
le ventilateur (2) comprend une partie de raccordement cylindrique (2b) communiquant avec le conduit (3),
le conduit (3) comprend une partie cylindrique (32) qui est de forme cylindrique et permet l'insertion en son sein de la partie de raccordement (2b) du ventilateur (2),
ladite structure de refroidissement de composant électrique monté sur véhicule étant **caractérisée en ce qu'**un ensemble (80) du ventilateur (2) et du conduit (3) comprend un élément en mousse (8) qui entoure une partie d'extrémité de la partie cylindrique (32) sur une surface périphérique interne, une surface d'extrémité et une surface périphérique externe de la partie cylindrique (32), et **en ce que**
le conduit (3) comprend une partie d'évacuation (35) qui présente une rainure (35a) s'étendant dans une partie d'extrémité inférieure de direction verticale du véhicule de la surface périphérique interne de la partie cylindrique (32), jusqu'à la surface d'extrémité de la partie cylindrique (32) le long de la surface périphérique interne.

3. Structure de refroidissement de composant électrique monté sur véhicule selon la revendication 2, dans laquelle un fond de rainure de la rainure (35a) est incliné pour être séparé d'une surface périphérique externe de la partie de raccordement (2b) en s'étendant vers la surface d'extrémité de la partie cylindrique (32).

4. Structure de refroidissement de composant électrique monté sur véhicule selon la revendication 2 ou 3, dans laquelle
l'élément en mousse (8) présente une certaine élasticité, et
une partie de l'élément en mousse (8) qui fait face à la rainure (35a) de la partie d'évacuation (35) est positionnée dans une région interne de la rainure (35a).

5. Structure de refroidissement de composant électrique monté sur véhicule selon l'une quelconque des revendications 2 à 4, dans laquelle l'ensemble (80) comprend une partie de conduit (9) qui s'étend d'une position immédiatement en dessous de la partie d'évacuation (35) jusqu'à une position prédéterminée qui ne chevauche pas le composant électrique prédéterminé (P) dans une vue de dessus, et guide le liquide évacué de la partie d'évacuation (35), jusqu'à la position prédéterminée.

6. Structure de refroidissement de composant électrique monté sur véhicule selon l'une quelconque des revendications 1 à 5, dans laquelle
la partie de ventilation (1) est positionnée au-dessus du composant électrique prédéterminé (P) et du ventilateur (2) dans une direction verticale de véhicule, et entre une partie latérale d'un siège arrière (4) et un panneau latéral (7) du véhicule dans une direction de largeur de véhicule, et
la structure de refroidissement de composant électrique monté sur véhicule comprend un élément sangle (B) qui recouvre une partie de l'orifice de ventilation (11) de la partie de ventilation (1) depuis un côté avant dans une direction longitudinale de véhicule.

7. Structure de refroidissement de composant électrique monté sur véhicule selon la revendication 6, dans laquelle l'élément sangle (B) fait partie de la ceinture de sécurité de siège.

8. Structure de refroidissement de composant électrique monté sur véhicule selon l'une quelconque des revendications 1 à 7, comprenant :
un boîtier de logement (6) qui stocke en son sein le composant électrique prédéterminé (P),
dans laquelle un espace (G) est ménagé entre le boîtier de logement (6) et un panneau de plancher (5) dans la région arrière du véhicule.
